(19) Europäisches Patentamt
European Patent Office
Office européen des brevets

(11) Publication number: 0 443 537 A2

# (12) EUROPEAN PATENT APPLICATION

(21) Application number: 91102383.6

(22) Date of filing: 20.02.91

(51) Int. Cl.5: C08G 18/08, C08G 18/34, C08G 18/67, C09J 175/14, C08J 3/28, B32B 27/40

(30) Priority: 20.02.90 JP 39420/90

(43) Date of publication of application: 28.08.91 Bulletin 91/35

(84) Designated Contracting States: BE DE FR GB

(71) Applicant: TAKEDA CHEMICAL INDUSTRIES, LTD.
3-6, Doshomachi 2-chome Chuo-ku
Osaka(JP)

(72) Inventor: Kubota, Tsutomu
6-9 Wakayamadai 1-chome, Shimamoto-cho
Mishima-gun, Osaka 618(JP)
Inventor: Shinoda, Tomoyoshi
4-10 Nishitanaka-cho
Ibaraki, Osaka 567(JP)
Inventor: Kataoka, Yasuhiko
161, Nikaidokita-sugatacho
Tenri, Nara 632(JP)

(74) Representative: von Kreisler, Alek, Dipl.-Chem. et al
Patentanwälte Von Kreisler-Selting-Werner, Deichmannhaus am Hauptbahnhof
W-5000 Köln 1(DE)

## (54) Water soluble photocurable polyurethane poly(meth-)acrylate, adhesives containing the same, and production of laminated articles.

(57) There is disclosed a water soluble photocurable polyurethene poly(meth)acrylate which contains in the molecule (meth)acryloyl groups and water soluble groups composed of carboxyls of a salt structure with ammoniums or amino nitrogens.

There is further disclosed an aqueous photocurable adhesive which comprises: (a) the water soluble photocurable polyurethene poly(meth)acrylate; (b) an adhesive coupling agent; and (c) water as a solvent. The adhesive is suitable for use in the production of laminated articles.

EP 0 443 537 A2

## Field of the Invention

This invention relates to a water soluble photocurable polyurethane poly(meth)acrylate, and more particularly, to a water soluble photocurable polyurethane poly(meth)acrylate which contains in the molecule (meth)acryloyl groups and water soluble groups composedof carboxyls of a salt structure with ammoniums or amino nitrogens, preferably a quaternary ammonium salt structure either as pendant groups from the molecule or at the ends of the molecule.

The invention further relates to an aqueous photocurable adhesive containing such a polyurethane poly-(meth)acrylate and production of laminated articles which have a large adhesive strength and heat resistance immediately after the lamination so that the laminated articles can be further processed, for instance, creased, scored or folded, or can be used to wrap or envelope articles immediately after dry lamination.

## Description of Prior Art

Heretofore, laminated or layered articles bonded together with adhesives have been produced usually by a dry lamination process. That is, a solvent adhesive such as an ethylene-vinyl acetate copolymer or a polyurethane adhesive is first applied on a first thin substrate such as a synthetic resin film, paper or metal foil, and dried, and then the first substrate is laminated under pressure to a second thin substrate with nip rolls.

In such a process, the use of a solvent adhesive of a small solid content is necessary to apply the adhesive evenly on the substrate, and hence it is also necessary to evaporate a large amount of the solvent to dry the adhesive. Further, a long period of time is needed to attain a sufficient and stable adhesion in the resulting laminated articles after the lamination has been carried out. In other words, there arises a problem that the substrate, such as resin films or metal foils, are readily separated from each other when the resultant laminated articles are creased or scored or folded for the production of boxes immediately after the lamination.

There is already known a lamination process wherein an emulsion adhesive is used in place of a solvent adhesive. However, the emulsion adhesive contains a surfactant to disperse polymer particles in an aqueous medium, and hence the use of the emulsion adhesive in the production of laminated articles is attended by undesirable foaming of the adhesive in a coating machine. As a further defect, the polymer particles have a tendency to coagulate after coating on a substrate,

A further process is also known wherein a solvent free adhesive is used. However, it is difficult to apply such an adhesive evenly on a substrate, for example, in the production of print laminates composed of paper and a synthetic resin film glued to each other, so that the resultant laminated articles are inferior in appearance. Moreover, a solvent free adhesive is generally poor in initial adhesive force and is not suitable for the production of print laminates which require a large initial adhesive force.

As a further aspect, the solvent, emulsion and solvent free adhesives are all used as a two component curable adhesive, and a long period of time is needed to attain a sufficient and stable adhesion in the resulting laminated articles after the lamination. Therefore, when such laminated articles are creased or scored or folded for the production of boxes immediately after the lamination, the substrates are readily separated from each other.

A one component solvent free adhesive is also known. However, such an adhesive is composed of, for example, polyurethane, so that it needs postcure of the adhesive such as moisture cure of isocyanate groups. Accordingly the adhesive also needs a long period of time to produce a sufficient and stable adhesion in the resulting laminated articles after the lamination.

A photocurable adhesive is also well known among the one component solvent free adhesives. This adhesive has a large initial adhesive force after lamination and no need of evaporating organic solvents therefrom after application to substrates. But as hereinbefore described, it is difficult to apply the one component adhesive onto substrates evenly. In addition, since the one component photocurable adhesive usually contains a large quantity of acrylic monomers theren, the adhesive smells bad and causes skin eruptions, but also the unreacted acrylic monomers remain in the resultant laminated articles to cause various problems such as bad smell and poison to health.

Very recently a system has been demanded increasingly which enables wrapping or packaging food or electronic parts with laminated films which have been produced in situ along with the manufacturing of food or electronic parts, that is, a system enabling "on-line" packaging of articles. Such a system needs a rapid curable one component adhesive which provides laminated films having a stable and strong adhesive strength immediately after the lamination. The above mentioned conventional adhesives are of no use for

the achievement of such a system.

A method of lamination is already known wherein an ultraviolet ray curable resin is used in a solvent adhesive, as disclosed in Japanese Patent Publication No. 57-23590. A solvent adhesive suitably used in such a lamination process is also known which contains a polyurethane poly(meth)acrylate, as disclosed in Japanese Patent Application Laid-Open No. 307945/1988.

However, there has hitherto been known no water soluble photocurable polyurethane poly(meth)-acrylate, nor such an aqueous photocurable adhesive as has a high initial adhesive strength.

Summary of the Invention

It is, therefore, a general object of the invention to provide a water soluble photocurable polyurethene poly(meth)acrylate which is useful as a component of a variety of aqueous photocurable compositions.

It is a specific object of the invention to provide an aqueous photocurable adhesive which contains such a polyurethene poly(meth)acrylate which is suitably used for the production of laminated articles.

It is a further object of the invention to provide a method of producing laminated articles wherein substrates are laminated together at a low nip temperature and yet have a large initial adhesive strength therebetween, thereby to provide laminated articles which can be further processed, for instance, creased, scored or folded into boxes, or can be used to wrap or envelope articles immediately after the lamination.

In accordance with the invention, there is provided a water soluble photocurable polyurethene poly-(meth)acrylate which contains in the molecule (meth)acryloyl groups and water soluble groups composed of carboxyls of a salt structure with ammoniums or amino nitrogens.

Further in accordance with the invention, there is provided an aqueous photocurable adhesive which comprises:

(a) a water soluble photocurable polyurethene poly(meth)acrylate which contains in the molecule (meth)-acryloyl groups and water soluble groups composed of carboxyls of a salt structure with ammoniums or amino nitrogens;

(b) an adhesive coupling agent in an amount of 0.05-10 parts by weight in relation to 100 parts by weight of the polyurethene poly(meth)acrylate; and

(c) water as a solvent.

There is also provided a method of producing laminated articles which comprises: applying the above aqueous photocurable adhesive on a first substrate, evaporating the water from the adhesive; laminating the first substrate to a second substrate; and applying ultraviolet ray or radiant ray to the resultant laminated substrates.

The term "laminated articles" herein means articles of thin substrates laminated or bonded together in the form of layered sheets, and the thin substrate includes resin film, paper and metal foil. There may be mentioned as a preferred example of the laminated articles, for example, a print laminate which is composed of a printed sheet of paper and a synthetic resin film laminated thereto.

The term "(meth)acrylate" includes either acrylate or methacrylate, and the term "(meth)acryloyl" includes either acryloyl or methacryloyl. Thus, the term "polyurethane poly(meth)acrylate" designates polyurethane polyacrylate, polyurethane polymethacrylate, polyurethane poly(acrylate/methacrylate), or mixtures of these.

Further, the adhesive used in the invention may be cured by application there to of radiant ray such as elecron ray, as well as ultraviolet ray, and such adhesives will be also referred to as photocurable adhesives herein.

The water soluble photocurable polyurethane poly(meth)acrylate will be first described.

The water soluble photocurable polyurethane poly(meth)acrylate of the invention contains in the molecule water soluble groups composed of carboxyls of a salt structure with ammoniums or amino nitrogens and (meth)acryloyl groups.

The water soluble groups in the water soluble photocurable polyurethane poly(meth)acrylate may be in any form, among which two forms are preferred. The first has a form of carboxyl group having a salt structure with ammonia or organic amines. Therefore, when P is taken as a polyurethane poly(meth)acrylate chain, the first form of the water soluble photocurable polyurethane poly(meth)acrylate of the invention is expressed by the formula:

$$P\text{-}[(COO)^{-}(HNR^1R^2R^3)^{+}]n \qquad (A)$$

wherein the water soluble group is preferably a pendant group from the polyurethane poly(meth)acrylate chain, $R^1$, $R^2$ and $R^3$ are independently a hydrogen, an alkyl, an alkekyl, an aryl, a substituted aryl or an

aralkyl, and n is an integer of 1 or more. The water soluble carboxyl group is preferably in the form of a quaternary ammonium salt structure with a tertiary amine.

The second form of the water soluble group is in the form of amino groups having a salt structure with a carboxyl group. Therefore, when P is taken as a polyurethane poly(meth)acrylate chain, the second form of the water soluble photocurable polyurethane poly(meth)acrylate of the invention is expressed by the formula:

$P\text{-}[(NHR^4R^5)^+(OOCR^6)^-]m$ (B)

wherein the water soluble group is preferably a terminal group of the molecule of the polyurethane poly-(meth)acrylate, $R^4$, $R^5$ and $R^6$ are independently a hydrogen, an alkyl, an alkekyl, an aryl, a substituted aryl or an aralkyl, and m is an integer of 1 or more. The water soluble amino group is preferably in the form of a quaternary ammonium salt structure of a tertiary amino group with an organic carboxylic acid.

As well known, a polyurethane poly(meth)acrylate having (meth)acryloyl groups in the molecule may be produced by reacting a vinyl monomer having both hydroxyl groups and (meth)acryloyl groups therein with a polyisocyanate having isocyanate groups at the ends of the molecule. The polyurethane is usually produced by the reaction of a diisocyanate compound with a compound having active hydrogens in the molecule. The diisocyanate compound herein the specification may include, depending upon the context, its dimer, trimer and a prepolymer prepared by the reaction of the diisocyanate compound with a compound having active hydrogens in the molecule

Therefore, the first form of the water soluble photocurable polyurethane poly(meth)acrylate represented by the formula (A) may be produced as follows. In the production of polyurethane, a compound which has two or more hydroxyls and one or more carboxyls in the molecule or a polyhydric polycarboxylic acid is used as a component of the compound having active hydrogens therein, to prepare a polyurethane which has carboxyl groups in the molecule. Then the polyurethane is reactd with a vinyl monomer which has both hydroxyls and (meth)acryloyl groups in the molecule, to prepare a polyurethane poly(meth)acrylate having carboxyl groups in the molecule. Finally, the polyurethane poly(meth)acrylate is reacted with ammonia or organic amine compounds, preferably tertiary amines, to convert the carboxyl groups to a salt structure with the ammonia or amines, preferably a quaternary ammonium salt structure.

In the production of the polyurethane having carboxyl groups in the molecule, the polyhydric polycarboxylic acid is used in such a manner that one equivalent of the total hydroxyls of the compound having active hydrogens and the polyhydric polycarboxylic acid is equal to one equivalent of the total isocyanate groups of the diisocyanate compound used; namely, the polyhydric polycarboxylic acid is used in such a manner that the total amount of the hydroxyls of the compound having active hydrogens and the polyhydric polycarboxylic acid is equivalent to the total amount of the isocyanate groups of the diisocyanate compound used.

The vinyl monomer having both hydroxyls and (meth)acryloyl groups in the molecule is likewise used in such a manner that one equivalent of the hydroxyls of the vinyl monomer is equal to one equivalent of the isocyanate groups of the polyurethane, namely the vinyl monomer is used in such a manner that the amount of the hydroxyls is equivalent to the amountof the isocyanate groups of the polyurethane.

The polyhydric polycarboxylic acid used is preferably represented by the fomula:

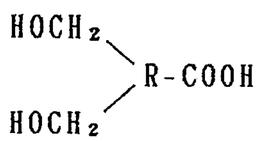

wherein R represents an alkylene group having carbons preferably of 2-10. There may be mentioned, as such polyhydric polycarboxylic acid, for example, dimethylol acetic acid, dimethylol propionic acid, dimethylol valeric acid or dimethylol caproic acid.

In order to convert the carboxyl groups into a salt structure, ammonia or organic amine compounds are used. The organic amine used preferably has a tertiary nitrogen, and may be exemplified by, for instance, aliphatic tertiary amines such as trimethyl amine, triethyl amine or tripropyl amine, N,N-dialkylalkanolamines such as N,N-dimethylethanolamine, N,N-diethylethanolamine, N,N-dimethylisopropanolamine or N,N-diethylisopropanolamine, trialkanolamines such as triethanolamine or triisopropanolamine. N-alkyldialkanolamines such as N-methyldiethanolamine, N-ethyldiethanolamine, N-methyldiisopropanolamine or N-ethyldiisopropanolamine may also be used.

Ammonia or these amines are used in such a manner that the amount of the nitrogen of the ammonia or the amine is equivalent to the amount of the carboxyl groups of the polyurethane poly(meth)acrylate.

In turn, the second form of the water soluble photocurable polyurethane poly(meth)acrylate represented by the formula (B) may be produced as follows. A polyurethane having isocyanate groups at the ends of the molecule is reacted with a compound which has one or more hydroxyls and one or more amino groups in the molecule, namely a hydroxyamine compound, as well as a vinyl monomer which has hydroxyls and (meth)acryloyl groups in the molecule, to prepare a polyurethane poly(meth)acrylate which has amino groups in the molecule. The amino group may be a pendant amino group or a terminal amino group. Then the polyurethane poly(meth)acrylate is reacted with an organic carboxylic acid to form a salt structure of the amino groups, preferably a quaternary ammonium salt structure.

In the production of the water soluble photocurable polyurethane poly(meth)acrylate represented by the formula (B), the hydroxyamine compound and the vinyl monomer are used in such a manner that the total amount of the hydroxyls of the hydroxy-amine compound and the vinyl monomer is equivalent to the amount of the isocyanate groups of the polyurethane used.

The hydroxy-amine compound used is preferably N,N-dialkylalkanolamines which have tertiary amino nitrogens in the molecule, such as N,N-dimethylethanolamine, N,N-diethylethanolamine, N,N-dimethylisopropanolamine or N,N-diethylisopropanolamine. N-alkyldialkanolamines may also be used as the hydroxy-amine compound, such as N-methyldiethanolamine, N-ethyldiethanolamine, N-methyldiisopropanolamine or N-ethyldiisopropanolamine.

The second form of the water soluble photocurable polyurethane poly(meth)acrylate may be alternatively produced as follows. A diisocyanate compound is reacted with a compound having active hydrogens in the molecule in the presence of a compound having two or more hydroxyls and one or more amino groups, preferably tertiary amino groups, in the molecule, or a polyhydric amine compound, to produce a polyurethane poly(meth)acrylate having amino groups in the molecule. Then the polyuerethane poly(meth)acrylate is neutralized with an organic carboxylic acid to convert the amino groups to a salt structure with the carboxylic acid.

There may be preferably used as the polyhydric amine compound, an N-alkyldialkanolamine as hereinabove mentioned. In the above method the compound having active hydrogens and the polyhydric amine compound are used in such a manner that the their hydroxyl groups are equivalent to the isocyanate groups of diisocyanate compound used.

Any carboxylic acid may be used if it forms a salt with the amino groups in the polyuerethane poly-(meth)acrylate molecule and makes the resultant salt water soluble. Preferred carboxylic acids include, for example, oxalic acid, acetic acid, propionic acid, valericacid, caproic acid, benzoic acid, benzyl acetic acid or lactic acid.

The carboxylic acid is used in such a manner that the carboxyl groups of the carboxylic acid are equivalent to the amino groups of the polyuerethane poly(meth)acrylate used.

The diisocyanate compound used for the production of polyuerethane may be either aromatic, aliphatic, alicyclic or aromatic-aliphatic, and may be exemplified by, for example, tolylenediisocyanate, diphenylmethanediisocyanate, 3,3'-dimethyldiphenylmethane-4,4'-diisocyanate, naphthylene-1,5-diisocyanate, phenylenediisocyanate, xylylenediisocyanate, tetramethylxylylenediisocyanate, 1,6-hexamethylenediisocyanate, 1,4-tetramethylenediisocyanate, isophorone diisocyanate, hydrogenated tolylenediisocyanate, hydrogenated diphenylmethane diisocyanate and hydrogenated xylylenediisocyanate. Among these are preferred in particular xylylenediisocyanate, tetramethylxylylenediisocyanate, isophorone diisocyanate hydrogenated xylylenediisocyanate.

A variety of compounds having active hydrogens in the molecule are usable for the production of urethane prepolymer. The compound includes polyols such as ethylene glycol, propylene glycol, diethylene glycol, dipropylene glycol, triethylene glycol, tetramethylene glycol, neopentyl glycol, butanediol, 1,6-hexanediol, 2-n-butyl-2-ethyl-1,3-propanediol, polyoxyethylene glycol, polyoxypropylene glycol, polyoxyethylene polyoxypropylene glycol, polytetramethylene ether glycol, polyoxypropylene triol, polyoxyethylene polyoxypropylene triol, trimethylol propane, glycerine, pentaerythritol, castor oil, bisphenol A-ethylene oxide adducts and bisphenol A-propylene oxide adducts.

Polyester polyols may also be used as the compound having active hydrogens therein. The polyester polyols may be produced by the conventional reactions of a polybasic carboxylic acid (anhydride) with a polyhydric alcohol. The polybasic carboxylic acids (anhydrides) usable include, for example, maleic acid (anhydride), succinic acid (anhydride), adipic acid, fumaric acid, phthalic acid (anhydride), terephthalic acid, isophthalic acid, methyltetrahydrophthalic acid (anhydride), tetrahydrophthalic acid (anhydride), sebacic acid, dodecanedioic acid, azelaic acid, glutaric acid, trimellitic acid (anhydride), hexahydrophthalic acid (anhydride) and dimer acids. The polyhydric alcohol usable includes, for example, aliphatic glycols such as

ethylene glycol, propylene glycol, 1,2-butylene glycol, 1,3-butylene glycol, 1,4-butylene glycol, 2,3-butylene glycol, hexylene glycol, decanediol, neopentyl glycol or 2-n-butyl-2-ethyl-1,3-propanediol; aliphatic polyether glycols such as diethylene glycol or dipropylene glycol; and such as glycerine, trimethylolpropane, 1,4-cyclohexanedimethanol, neopentyl glycol ester of hydroxypivalic acid, 1,4-cyclohexanediol or hydrogenated bisphenol A.

There may be used as the beforesaid vinyl monomer which has both hydroxyl groups and vinyl groups, preferably (meth)acryloyl groups therein, for instance, N-methylol (meth)acrylamide, hydroxyalkyl (meth)-acrylates such as hydroxyethyl (meth)acrylate or hydroxypropyl (meth)acrylate, pentaerythritol mono(meth)-acrylate, allyl alcohol, mono(meth)acrylate esters of polyethylene glycol, monovinyl ethers of ethylene glycol or polyethylene glycol, monovinyl ethers of propylene glycol or polypropylene glycol, or Placcel FA-1 (Daicel Kagaku Kogyo K.K.) represented by the formula of

$CH_2 = CHCOOCH_2CH_2OCO(CH_2)_5OH$.

It is preferred that the water soluble polyurethane poly(meth)acrylate represented by the frmula (A) is produced by reacting a diisocyanate compound, preferably a monomeric diisocyanate compound, with at least one compound having active hydrogens therein selected from the group consisting of an alkylene glycol, a polyoxy alkylene glycol and a polyol, and a polyhydric polycarboxylic acid, to provide a polyurethane having pendant carboxyls; reacting the polyurethane with a hydroxylalkyl (meth)acrylate to provide a polyurethane poly(meth)acrylate; and then reacting the carboxyls with ammonia or organic amine compounds to a salt structure.

In the production of the polyurethane having pendant carboxyls as above, an polyoxy alkylene glycol is preferably used as the compound having active hydrogens, with or without an alkylene glycol and a polyol.

It is also preferred that the polyurethane having pendant carboxyls is produced by the reaction of a diisocyanate compound with a polyester polyol and a polyhydric polycarboxylic acid. The polyester polyol may be used together with at least one of an alkylene glycol and a polyoxy alkylene glycol.

In the production of the polyurethane as above, there may be preferably used such an alkylene glycol as ethylene glycol, propylene glycol, 1,3-butanediol, neopentyl glycol or 2-n-butyl-2-ethyl-1,3-propanediol, and such a polyoxy alkylene glycol as diethylene glycol, dipropylene glycol, triethylene glycol, tripropylene glycol, polyoxyethylene glycol, polyoxypropylene glycol or polyoxyethylene polyoxypropylene glycol.

As the abovementioned polyol, there may be used a trifunctional or more functional alcohols of the compounds having active hydrogens therein as hereinbefore set forth. The polyester polyol has been set forth hereinbefore.

The use of a compoound having active hydrogens therein which contains a polyol such as trimethylol propane in the production of polyurethane provides a mixture of a difunctional polyurethane and a trifunctional or more functional polyurethane. A water soluble polyurethane poly(meth)acrylate produced using such a mixture of polyurethanes is one of preferred embodiments of the invention.

The water soluble polyurethane poly(meth)acrylate represented by the frmula (B) is preferably produced by reacting a diisocyanate compound, preferably a monomeric diisocyanate compound, with at least one compound having active hydrogens therein selected from the group consisting of an alkylene glycol, a polyoxy alkylene glycol and a polyol, to provide a polyurethane; reacting the polyurethane with a hydroxylalkyl (meth)acrylate and a hydroxy tertiary amine compound to provide a polyurethane having tertiary amino groups in the molecule; and then reacting the tertiary amino groups with an organic carboxylic acid to a salt structure.

In the production of the polyurethane as above, a polyoxy alkylene glycol is preferably used as the compound having active hydrogens, with or without an alkylene glycol and a polyol. It is also preferred that the polyurethane is produced by the reaction of a diisocyanate compound with a polyester polyol as hereinbefore mentioned.

There have herein been mentioned a number of compounds having active hydrogens in the molecule for the production of polyurethane. The compound having active hydrogens in the molecule may be used singly, but it is preferred that the compound is used as a mixrure of two, one having a relatively low molecular weight and an OH equivalent of 30-200 and the other having a medium to high molecular weight and an OH equivalent of 350-4000, in such a manner that the mixture has an average OH equivalent in the range of 70-2000, preferably 90-900.

The low molecular weight compound used is preferably a polyoxyalkylene glycol such as diethylene glycol, dipropylene glycol, polyoxyethylene glycol, polyoxypropylene glycol or polyoxyethylene polyoxypropylene glycol, whereas the medium to high molecular weight compound used is preferably a

polyoxyalkylene glycol such as polyoxyethylene glycol, polyoxypropylene glycol or polyoxyethylene polyoxypropylene glycol.

There may also be preferably used, as the medium to high molecular weight compound, a polyester polyol produced by the reaction of a diabasic carboxylic acid with an aliphatic diabasic carboxylic acid being preferred, of 4-10 carbons such as adipic acid, azelaic acid or sebacic acid, with an alkylene glycol preferably of 2-10 carbons, most preferably of 3-8 carbons such as 1,4-butylene glycol or 1,6-hexylene glycol.

As hereinbefore set forth, the polyurethane poly (meth) acrylate having carboxyls or aminos in the molecule is prepared and these functional groups are converted to a form of salts to make the polyurethane poly(meth)acrylate water soluble. In the invention, it is preferred that the polyurethane poly(meth)acrylate has a molecular weight in the range of 800-16000, most preferably 2000-12000, before it is converted into a water soluble salt.

The water soluble photocurable polyurethane poly(meth)acrylate of the invention may have in the molecule both the first and second salt structures as represented by the formulae (a) and (B). The polyurethane poly(meth)acrylate may also contain a polyurethane (meth)acrylate which has no salt structure in such an amount as not to make the mixture water insoluble. The amount is usually not more than 40 % by weight of the water soluble polyurethane (meth)acrylate.

The an aqueous photocurable adhesive of the invention comprises:

(a) the water soluble photocurable polyurethene poly(meth)acrylate as set forth hereinbefore;

(b) an adhesive coupling agent in an amount of 0.05-10 parts by weight in relation to 100 parts by weight of the polyurethene poly(meth)acrylate; and

(c) water as a solvent.

The adhesive coupling agent is used in the adhesive as an adhesion accelerator. The adhesive coupling agent is preferably a silane coupling agent, a titanate coupling agent or an aluminum coupling agent.

There may be mentioned as the silane coupling agents, for example, aminosilanes such as $\gamma$ -aminopropyltriethoxysilane, $\gamma$ -aminopropyltrimethoxysilane, N- $\beta$-(aminoethyl)-$\gamma$ -aminopropyltrimethoxysilane, N- $\beta$-(aminoethyl)- $\gamma$-aminopropylmethyldimethoxysilane or N-phenyl- $\gamma$ -aminopropyltrimethoxysilane, epoxy silanes such as $\beta$ - (3,4-epoxycyclohexyl)ethyltrimethoxysilane,$\gamma$ -glycidoxypropyltrimethoxysilane or $\gamma$ -glycidoxypropyltriethoxysilane, and vinyl silanes such as vinyltris ($\beta$ -methoxyethoxy)silane, vinyltriethoxysilane, vinyltrimethoxysilane, or $\gamma$ -methacryloxypropyltrimethoxysilane, among others which include hexamethyldisilazane or $\gamma$ -mercaptopropyltrimethoxysilane.

There may be mentioned as the titanate coupling agents, for example, tetraalkoxytitaniums such as tetraisopropoxytitanium or tetra-n-butoxytitanium, butyltitanate dimer, tetrastearyltitanate, triethanolaminetitanate, titanium acetylacetonate, titanium ethylacetylacetonate, titanium lactate, tetraoctylene glycol titanate, tetrakis(2-ethylhexoxy)titanium, tetrastearoxytitanium, isopropyltris(isostearoyl)titanium, isopropyltridecylbenzenesulfonyltitanate, isopropyltris(dioctylpyrophoaphate)titanate, tetraisopropylbis-(dioctylphosphite) titanate, tetraoctylbis(ditridecylphosphite)titanate or tetra(2,2-diallyloxymethyl-1-butyl)bis-(dioctylpyrophosphate)ethylene-titanate. As the aluminum coupling agents may be mentioned, for example, acetalkoxyaluminum diisopropylates.

Among the above coupling agents, the aminosilanes are most preferred.

The use of the adhesive coupling agent as an adhesion accelerator accelerates the adhesion between the thin substrates and prevents pulse failure when the substrates are separated rapidly, but also it improves resistance to separation of substrates under high temperature conditions, i.e., resistance to creep. Consequently, the resultant laminated articles are prevented from lifting or separation of the substrate when the laminated articles are creased or scored or folded, or are used as wrapping films immediately after the lamination.

The coupling agent is contained in the adhesive in an amount usually of about 0.05-10 parts by weight, preferably in an amount of about 0.1-5 parts by weight, in relation to 100 parts by weight of the water soluble polyurethane poly(meth)acrylate, and if any, a polyurethane poly(meth)acrylate having no water soluble groups in the molecule. When the amount of the coupling agent in the adhesive is too small, the resultant adhesive fails to provide such desired adhesion as described above. But when the amount is too large, the resultant adhesive is unstable and apt to provide laminate articles of bad appearance.

The adhesive of the invention contains water as a sole or main medium in contrast to an organic solvent used as a medium in the conventional solvent adhesives. The adhesive thus contains no organic solvent or, if it contains when necessary , the amount is adjusted to be very small, so that it is not necessary to evaporate an organic solvent, or it is necessary to evaporate only a very small amount of organic solvent after the adhesive is applied onto substates and dried in the production of laminated articles, as desirable from the standpoint of environmental safety.

The adhesive of the invention may contain, if desired, a second photopolymerizable compound therein other than the before described polyurethane poly(meth)acrylate. Such a second photopolymerizable compound usable includes, for example, vinyl monomers having photopolymerizable vinyl groups therein, poly(meth)acrylate esters, epoxy poly(meth)acrylates, polyester poly(meth)acrylates, polybutadiene poly-(meth)acrylates, photopolymerizable vinyl oligomers and polymers.

The photopolymerizable vinyl monomers are exemplified by methyl (meth)acrylate, ethyl (meth)acrylate, n-butyl (meth)acrylate, isobutyl (meth)acrylate, 1-ethylpropyl (meth)acrylate, 1-methylpentyl (meth)acrylate, 2-methylpentyl (meth)acrylate, 3-methylpentyl (meth)acrylate, 1-ethylbutyl (meth)acrylate, 2-ethylbutyl (meth)acrylate, 2-ethylhexyl (meth)acrylate, isooctyl (meth)acrylate, 3,5,5-trimethylhexyl (meth)acrylate, decyl (meth)acrylate, dodecyl (meth)acrylate, tetrahydrofurfuryl (meth)acrylate, butoxyethyl (meth)acrylate, ethylcarbitol (meth)acrylate, methyl triglycol (meth)acrylate, phenoxyethyl (meth)acrylate, phenoxypropyl (meth)acrylate, glycerol mono (meth)acrylate, acrylic acid, methacrylic acid, maleic anhydride, fumaric acid, half ester of maleic acid, itaconic acid, N-methylol (meth)acrylamide, hydroxyethyl (meth)acrylate, hydroxypropyl (meth)acrylate, pentaerythritol mono(meth)acrylate, allyl alcohol, mono(meth)acrylate ester of polyethylene glycol, mono(meth)acrylate ester of adducts of alkylene oxides to phenols or alkylphenols.

Further examples of the photopolymerizable vinyl monomers include, for example, monovinyl ethers of ethylene glycol or polyethylene glycol, monovinyl ethers of propylene glycol or polypropylene glycol, Placcel FA-1 as decribed hereinbefore, aminoethyl (meth)acrylate, N-methylaminoethyl (meth)acrylate, N,N-dimethylaminoethyl (meth)acrylate, N-ethylaminoethyl (meth)acrylate, N,N-diethylaminoethyl (meth)acrylate, allylamine, diallylamine, glycidyl (meth)acrylate, glycidyl allyl ether, styrene, vinyl acetate, acrylonitrile, methacrylonitrile, vinyl ethers, phenoxyethyl (meth)acrylate, phenyl diethylene glycol (meth)acrylate, phenyl tetraglycol (meth)acrylate, 2-hydoxy-3-phenoxypropyl (meth)acrylate, p-nonylphenoxydiethylene glycol (meth)acrylate, N-vinyl pyrrolidone, an acrylate ester P-550A (by KyoeishaYushi Kogyo K.K., Japan) having the formula of

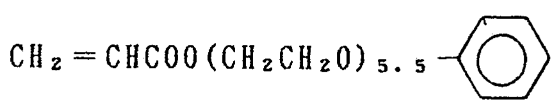
,

The poly(meth)acrylate esters are exemplified by di-, tri- or tetraethylene glycol di(meth)acrylate, dipropylene glycol di (meth)acrylate, dipentamethylene glycol di(meth)acrylate, tetraethylene glycol di-(meth)acrylate, tetraethylene glycol dichloroacrylate, glycerol tri(meth)acrylate, diglycerol di(meth)acrylate, digricerol tetra(meth)acrylate, tetramethylene di(meth)acrylate, ethylene di(meth)acrylate, neopentyl glycol di(meth)acrylate, trimethylolpropane tri(meth)acrylate, pentaerythritol di(meth)acrylate, pentaerythritol tri-(meth)acrylate, 1,6-hexanediol di(meth)acrylate, and NK Ester BPE-200 (Shin-Nakamura Kagaku Kogyo K.K., Japan) represented by the formula

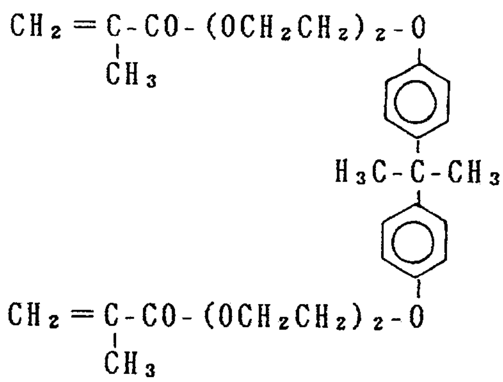
,

The epoxy poly(meth)acrylates usable in the invention are obtainable by, for example, reacting a compound containing epoxy groups with acrylic acid or methacrylic acid. Therefore, some examples of the epoxy poly(meth)acrylates are Epoxy Ester 40EM (Kyoeisha Yushi Kogyo K.K., Japan), an adduct of methacrylic acid to an epoxy compound, represented by the formula

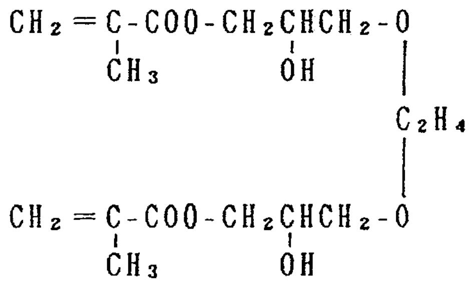

,

Epoxy Ester 70PA (Kyoeisha Yushi Kogyo K.K., Japan), an adduct of acrylic acid to an epoxy compound, represented by the formula

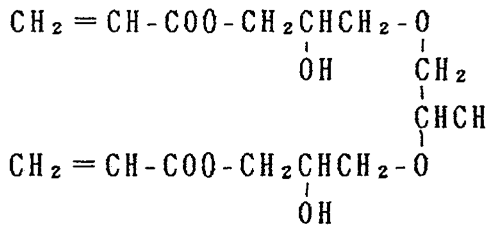

,

Epoxy Ester 80MFA (Kyoeisha Yushi Kogyo K.K., Japan), an adduct of acrylic acid to an epoxy compound, represented by the formula

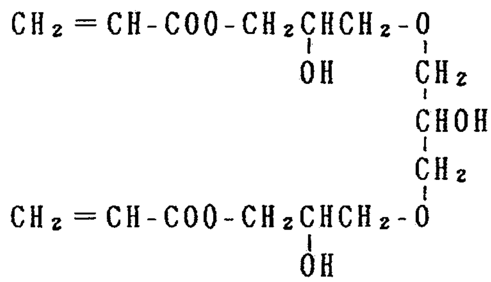

,

Epoxy Ester 3002M (Kyoeisha Yushi Kogyo K.K., Japan), an adduct of methacrylic acid to an epoxy compound, represented by the formula

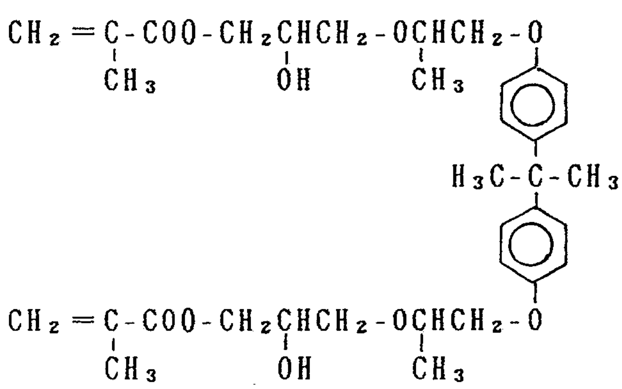

,

and Epoxy Ester 3002A (Kyoeisha Yushi Kogyo K.K., Japan), an adduct of acrylic acid to an epoxy compound, represented by the formula

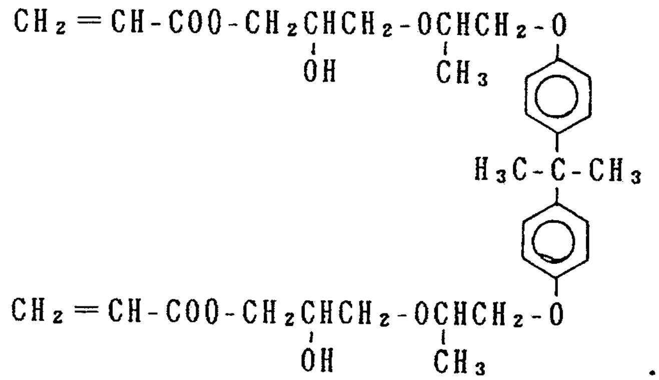

The polyester poly(meth)acrylates usable in the invention are obtainable by, for example, reacting a polyesterpolyol with acrylic acid or methacrylic acid, and are exemplified by HX-220 (Nippon Kayaku K.K., Japan) represented by the formula

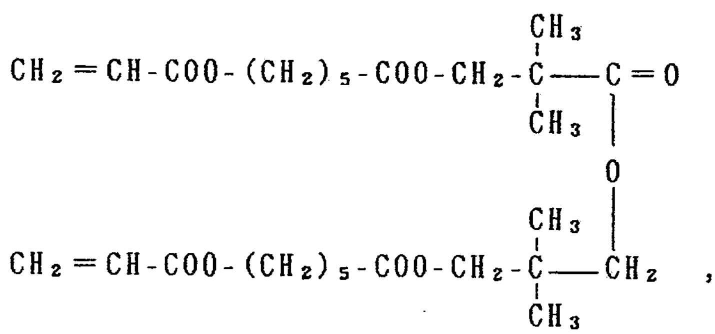

HX-620 (Nippon Kayaku K.K., Japan) represented by the formula

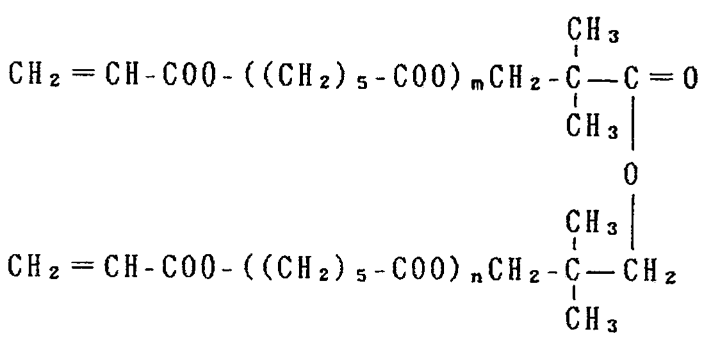

wherein m and n are independently 1,2 or 3, but m + n = 4, and Biscoat 3700 (Osaka Yuki Kagaku Kogyo K.K., Japan) represented by the formula

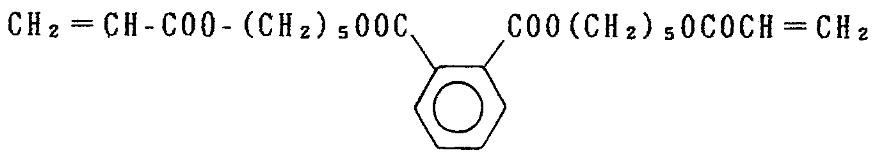

The polybutadiene poly(meth)acrylates include (meth)acrylates obtainable by the reaction of polybutadienediol with acrylic acid or methacrylic acid, and hence are exemplified by Quinbeam 101 (Nippon Zeon K.K., Japan) having a vinyl equivalent of 355 and a viscosity of 21000 cps at 25 °C.

The adhesive of the invention cures rapidly by photoirradiation. The photoirradiation herein means the irradiation of light, usually ultraviolet light of the wavelength of about 180-460 nm. The source of such ultraviolet light includes low-, medium-, high- and ultra high-pressure mercury lamps, xenon lamps, ultraviolet fluorescent lamps and carbon arc lamps. When necessary, radiations such as alpha ray, beta ray, gamma ray, X-ray or electron ray are usable.

When ultraviolet light is used to cure the adhesive, the adhesive usually contains photosensitizers, which are exemplified by benzoin compounds such as benzoin, benzoin methylether, benzoin ethylether, benzoin isobutylether or benzoin octylether; carbonyl compounds such as benzil, diacetyl, diethoxyacetophenone, 2,2-dimethoxy-2-phenyl-acetphenone, 2-hydroxy-2-methyl-propiophenone, 4'-isopropyl-2-hydroxy-2-methylpropiophenone, methylanthraquinone, acetophenone, benzophenone, methyl benzoylformate, benzyl methyl ketal, 1-hydroxycyclohexyl phenyl ketone or 2-methyl-1-(4-(methylthio)phenyl)-2-morpholino)propene-1; sulfur compounds such as diphenyl disulfide or dithiocarbamate; naphthalene compounds such as $\alpha$ -chloromethylnaphthalene; fused aromatic hydrocarbons such as anthracene; and metal salts such as iron chloride.

These photosensitizers are used usually in an amount of about 0.01-20 parts by weight, preferably about 0.1-10 parts by weight, in relation to 100 parts by weight of the photopolymerizable compounds used including the photocurable polyurethane poly(meth)acrylate and if any the second photopolymerizable compounds. However, when ionizing electromagnetic radiations are used such as electron ray or gamma ray, the adhesive may contain no photosensitizers therein since the adhesive cures rapidly in the absence of photosensitizers by the irradiation to the adhesive.

The adhesive used in the invention may further contain therein, in addition to the foregoings, various additives which are known in the art, such as fillers, softeners, antioxidants, stabilizers, tackifiers, leveling agents, antifoaming agents, organic solvents or plasticizers.

There may be used, as the tackifiers, for instance, rosins such as rosin acid, polymerized rosin, rosin acid ester, modified rosin, modified rosin ester, hydrogenated rosin, hydrogenated polymerized rosin or hydrogenated rosin acid, or resins such as terpene resin, terpene phenol resin, aromatic hydrocarbon resin, aliphatic hydrocarbon resin or petroleum resin.

The adhesive of the invention has a solid content usually of 5-90 % by weight, and can be coated on a substrate evenly.

The adhesive of the invention may contain, when necessary, an organic solvent as a further medium. The solvent used includes, for example, lower aliphatic alcohols such as methanol or isopropanol, lower alkyl esters of aliphatic lower carboxylic acids such as ethyl acetate, dialkyl ketones such as ace tone or methyl ethyl ketone, or aromatic hydrocarbons such as benzene, toluene or xylene. However, aliphatic alcohols such as methanol or ethanol, or high flash point solvents such as diethylene glycol dimethyl ether, dimethyl formamide or N-methyl-2-pyrrolidone is preferred.

The organic solvent, when used, is selected in consideration of the coatability, enviromental safety, legal requirements and the like, and the amount thereof is usually not more than 30 % by weight, preferably not more than 15 % by weight, based on the adhesive.

The photocurable adhesive of the invention is suitably used for the production of laminated articles. When used for this purpose, it is preferred that the adhesive has a glass transition temperature of not more than about 20° C, preferably not more than about 5° C, when water and an organic solvent if any has been evaporated and the adhesive is applied to substrates to bond the substrates together. An adhesive having such a low glass transition temperature has a good flowability at a low nip temperature, and hence the substrates are bonded and laminated together without being thermally deformed and curling to provide laminated articles of excellent appearance.

According to the process of the invention, the photocurable adhesive is at first full coated on a first substrate, and water and, if any, an organic solvent contained therein is evaporated, and then a second substrate is bonded and laminated together to the first substrate at low nip temperatures usually by means

of room temperature nip rolls or if necessary by means of heat nip rolls. Then ultraviolet ray or radiant ray is applied to the layered substrates usually over a period ranging from about 0.01 seconds to 60 seconds, thereby to photocure the adhesive, to provide laminated articles which have high adhesive strength between the first and second substrates and high heat resistance immediately after the lamination as well as excellent appearance.

In the production of the laminated articles, when at least one of the substrates used allows the permeation of ultraviolet ray therethrough, for example, when a transparent resin film is used, ultraviolet ray is applied to the transparent film. However, when either films have full printings thereon or are metal foils which prevents the permeation of ultraviolet ray, then radiant ray such as electron ray is applied to the films after the lamination. The radiant ray permeates either opaque films or metal foils so that it may be applied to either sides of the laminated films.

The process of the invention is especially useful for the production of laminated films, in particular print laminates since the resultant print laminates are free from thermal curling as well as they have high adhesive strength between the films and high heat resistance immediately after the lamination, and also an excellent appearance.

In the conventional print lamination, substrates are laminated and bonded together at a nip temperature of about 40-100° C. When a high nip temperature is employed within the above range, strong adhesion is attained between the substrates, but the resultant laminate is thermally deformed and curled so that it has a bad appearance. Thus, it is preferred that the nip temperature is low. Hhowever, when a low nip temperature is employed, a sufficient adhesion is not attained between the substrates, and the resultant laminated article does not stand practical use.

In contrast to the above, the method of the invention enables a sufficient adhesion between the substrates at a low nip temperature, usually in the range of 5-60° C, preferably 15-40° C, and most preferably 20-40° C, to provide laminated articles of excellent appearance and gloss.

Usually in the process of the invention, the first and second substrates are fed continuously in line while the first substrate is coated with the adhesive and laminated to the second substrate, and then the resultant layered sheets are irradiated, so that the irradiation amount is controllable by selecting the speed at which the substrates are carried and the time for which the radiant ray is applied thereto. The speed may range usually from 2-500 m/minute.

As hereinbefore set forth, the substrate includes synthetic resin film, paper and metal foil. Althogh not limited, the film is usually not more than about 1 mm in thickness. When ultraviolet ray is applied to the photocurable adhesive, a transparent resin film is used as at least one component of the laminated articles.

When both substrates are synthetic resin film having printed patterns all over the film or metal foil to which ultraviolet ray is impermeable, electromagnetic ray such as electron ray is used as an irradation means. The electron ray, for example, is permeable to such an opaque material and is applied either side of the substrates after the substrates are layered together.

The resin film may be composed of, for example, polyvinyl chloride resin, polyvinylidene chloride, polyethylene, polypropylene, polystyrene, ABS resin, polyamide, polyester, polyurethane, polyvinyl alcohol, ethylene-vinyl acetate copolymer or chlorinated polypropylene. The film may be colorless and transparent, or may carry thereon printed letters or patterns. There may be preferably used aluminum foil as a metal foil.

The paper used includes simili, wood free paper, kraft paper, art coat paper, caster coat paper, bowl paper, artificial perchment, waterproof paper, glassine paper and linerboard. The paper may carry printed patterns or letters thereon. When an adhesive is applied to paper, the paper may have a window.

The adhesive is coated on a substrate usually in a solid amount of about 0.1-1000 g, preferably about 1-50 g per square meter of the substrate. Any coating means may be adopted to apply the adhesive to a substrate, for example, a natural coater, a knife belt coater, a floating knife, a knife-over-roll, a knife-on-blanket, a spray coater, a dip coater, a kiss roll, a squeeze coater, a reverse coater, an air blade coater, a curtain flow coater or a gravure coater.

The invention will now be described with reference to the following examples, which however are intended to illustrate the invention only and are not to be construed as limiting the scope of the invention. In the examples, weights and percentages are by weight when otherwise designated.

## EXAMPLES

### Production of Aqueous Photocurable Adhesives

#### Example 1

An amount of 295 parts of polyoxypropylene glycol having an average molecular weight of 1000, an amount of 79.3 parts of dipropylene glycol, 39.6 parts of dimethylol propionic acid and 313 parts of tetramethylxylylene diisocyanate were reacted in 83.3 parts of diethylene glycol dimethylether, and then 23.3 parts of hydroxyethyl acrylate were added to the resulting reaction mixture so that the remaining diisocyanate was reacted therewith to provide a polyurethane diacrylate having pendant carboxyl groups. Finally, an amount of 167 parts of ethanol was added to the reaction mixture to provide a solution.

An amount of 20.5 parts of triisopropanolamine was added to 365 parts of the solution while maintaining the solution at a temperature of 40-50 °C, to neutralize the carboxyl groups, thereby to provide a solution of polyurethane diacrylate having carboxyl groups in the form of salt. An amount of 609 parts of water, 2.74 parts of $\gamma$ -aminopropyltriethoxysilane, 1.37 parts of 2-hydroxy-2-methylpropiophenone and 1.37 parts of antioxidant were added to the solution to provide an aqueous photocurable adhesive.

The adhesive contained 60.9 % of water, and had a flash point of 49 °C and a combustion point of more than 80 °C.

The adhesive was coated on a first resin film or a printed paper having a window and a thickness of 0.5 mm, and the water and solvent were evaporated therefrom. Then, a second resin film or paper was laminated to the first substrate, and ultraviolet ray was applied thereto under the conditions shown in Table 1 from a height of 10 cm with a high pressure mercury lamp having an irradiation tube of one meter long.

Example 2

There was prepared an aqueous photocurable adhesive which was the same as in the Example 1 except that it contained no 2-hydroxy-2-methylpropiophenone (photopolymerization initiator).

Laminated articles were produced in the same manner as in the Example 1 using electron ray as a radiant ray in place of ultraviolet ray under the conditions shown in Table 1.

Example 3

An amount of 2400 parts of polyoxypropylene glycol having an average molecular weight of 1000, an amount of 330 parts of dipropylene glycol, 290 parts of dimethylol propionic acid and 1673 parts of hydrogenated xylylene diisocyanate were reacted, and then 240 parts of hydroxyethyl acrylate were added to the resulting reaction mixture so that the remaining diisocyanate was reacted therewith to provide a polyurethane diacrylate having pendant carboxyl groups.

An amount of 219 parts of triethylamine was added to the polyurethane diacrylate to neutralize the carboxyl groups, thereby to provide polyurethane diacrylate having carboxyl groups in the form of salt. An amount of 12308 parts of water, 49.3 parts of tetraisopropoxytitanium, 24.6 parts of 2,2-dimethoxy-2-phenylactophenone, 24.6 parts of 1-hydroxycyclohexylphenyl ketone and 24.6 parts of antioxidant were added to the solution to prepare an aqueous photocurable adhesive.

The adhesive was coated on a first resin film and the water was evaporated there from. Then, a second resin film or paper was laminated to the first substrate with rolls, and ultraviolet ray was applied thereto under the conditions shown in Table 2 in the samemanner as in the Example 1, to provide laminated articles.

Example 4

There was prepared an aqueous photocurable adhesive which was the same as in the Example 3 except that it contained no photopolymerization initiator.

Laminated articles were produced in the same manner as in the Example 3 using electron ray as a radiant ray in place of ultraviolet ray under the conditions shown in Table 2..

Example 5

An amount of 664 parts of adipic acid and 522 parts of 1,4-butylene glycol were reacted to provide a polyester polyol having an average molecular weight of 1000 and an OH roxyl equivalent of 500.

An amount of 2993 parts of the above polyester polyol, 338 parts of diethylene glycol, 233 parts of dimethylol propionic acid and 2176 parts of tetramethylxylylene diisocyanate were reacted, and then 281 parts of hydroxypropyl acrylate were added to the resulting reaction mixture so that the remaining diisocyanate was reacted therewith to provide polyester polyurethane diacrylate having pendant carboxyl groups. Finally, an amount of 1505 parts of ethanol was added to the reaction mixture to provide a solution.

An amount of 644 parts of triisopropanolamine was added to the solution while maintaining the solution at a temperature of about 60° C, to neutralize the carboxyl groups, thereby to provide a solution of polyester polyurethane diacrylate having carboxyl groups in the form of salt. An amount of 12896 parts of water, 61 parts of γ -aminopropyltriethoxysilane and 31 parts of 2-hydroxy-2-methylpropiophenone were added to the solution to prepare an aqueous photocurable adhesive.

The adhesive was coated on a first resin film and the water and ethanol were evaporated therefrom. Then, a second resin film or paper was laminated to the first substrate with rolls, and ultraviolet ray was applied thereto under the conditions shown in Table 2 in the same manner as in the Example 1 to provide laminated articles.

Example 6

There was prepared an aqueous photocurable adhesive which was the same as in the Example 5 except that it contained no photopolymerization initiator.

The adhesive was coated on a first resin film or a printed paper having a window and a thickness of 0.5 mm, and the water and solvent were evaporated therefrom. Then, a second resin film or paper was laminated to the first substrate with rolls, and electron ray was applied to the layered material from the side of the resin film under the conditions shown in Table 3.

Example 7

An amount of 4141 parts of polyoxyethylene polyoxypropylene glycol having an oxyethylene content of about 75 % and an average molecular weight of 2200, an amount of 659 parts of 2-n-butyl-2-ethyl-1,3-propanediol, 536 parts of trimethylol propane and 3333 parts of isophorone diisocyanate were reacted in 1029 parts of N-methyl-2-pyrrolidone, and then 236 parts of hydroxyethyl acrylate and 357 parts of N,N-dimethylethanolamine were added to the resulting reaction mixture so that the remaining diisocyanate was reacted therewith to provide polyurethane polyacrylate having tertiary amino groups at the ends of molecules. Finally, an amount of 1287 parts of ethanol was added to the reaction mixture to provide a solution.

An amount of 360 parts of lactic acid was added to the solution to neutralize the tertiary amino groups, thereby to provide a solution of polyurethane polyacrylate having amino groups in the form of quaternery ammonium salt.

An amount of 20580 parts of water, 96 parts of γ -aminopropyltrimethoxysilane and 96 parts of 2-hydroxy-2-methylpropiophenone were added to the solution to prepare an aqueous photocurable adhesive.

The adhesive was coated on a first resin film and the water and organic solvent were evaporated therefrom. Then, a second resin film or paper was laminated to the first substrate with rolls, and ultraviolet ray was applied thereto under the conditions shown in Table 3 in the same manner as in the Example 1 to provide laminated articles.

Example 8

There was prepared an aqueous photocurable adhesive which was the same as in the Example 7 except that it contained no photopolymerization initiator.

Laminated articles were produced in the same manner as in the Example 7 using electron ray as a radiant ray in place of ultraviolet ray under the conditions shown in Table 3.

Example 9

An amount of 2672 parts of polyoxypropylene glycol having an average molecular weight of 1000, an amount of 686 parts of polyoxypropylene glycol having an average molecular weight of 200, an amount of 258 parts of dimethylol propionic acid and 1746 parts of hydrogenated xylylene diisocyanate were reacted, and then 258 parts of hydroxypropyl acrylate were added to the resulting reaction mixture so that the remaining diisocyanate was reacted therewith to provide polyurethane diacrylate having pendant carboxyl groups, followed by addition thereto of 1431 parts of ethanol to provide a solution.

An amount of 194 parts of triethylamine was added to the solution of the polyurethane diacrylate to neutralize the carboxyl groups, thereby to provide polyurethane diacrylate having carboxyl groups in the form of salt. An amount of 9600 parts of water, 56.2 parts of γ -aminopropyltriethoxysilane, 56.2 parts of 2-hydroxy-2-methylpropiophenone and 14 parts of antioxidant were added to the solution to provide an

aqueous photocurable adhesive.

The adhesive was coated on a first resin film and the water and ethanol were evaporated therefrom. Then, a second resin film or paper was laminated to the first substrate with rolls, and ultraviolet ray was applied there to in the same manner under the conditions shown in Table 4 as in the Example 1 to provide laminated articles.

Example 10

There was prepared an aqueous photocurable adhesive which was the same as in the Example 9 except that it contained no photopolymerization initiator.

The adhesive was coated on a first resin film or a printed paper having a window and a thickness of 0.5 mm, and the water and ethanol were evaporated therefrom. Then, a second resin film or paper was laminated to the first substrate with rolls, and electron ray was applied thereto under the conditions shown in Table 4 to provide laminated articles.

Example 11

An amount of 565 parts of adipic acid and 586 parts of 1,6-hexylene glycol were reacted to provide a polyester polyol having an average molecular weight of 1000 and an OH equivalent of 500.

An amount of 8000 parts of the above polyester polyol, 382 parts of dipropylene glycol, 536 parts of trimethylol propane, 690 parts of dimethylol propionic acid and 5044 parts of hydrogenated xylylene diisocyanate were reacted in 2770 parts of p-nonylphenoxydiethylene glycol acrylate, and then 1044 parts of hydroxyethyl acrylate were added to the resulting reaction mixture so that the remaining diisocyanate was reacted therewith to provide polyester polyurethane diacrylate having pendant carboxyl groups.

An amount of 767 parts of triethanolamine was added to the polyester polyurethane diacrylate to neutralize the carboxyl groups, thereby to provide polyester polyurethane diacrylate having carboxyl groups in the form of salt. An amount of 36500 parts of water, 100 parts of N- $\beta$ - (aminoethyl)- $\gamma$ -aminopropyltrimethoxysilane, 277 parts of 2,2-dimethoxy-2-phenylacetophenone and 46 parts of antioxidant were added to prepare an aqueous photocurable adhesive.

The adhesive was coated on a first resin film or a printed paper having a window and a thickness of 0.5 mm, and the water was evaporated therefrom. Then, a second resin film or paper was laminated to the first substrate with rolls, and ultraviolet ray was applied thereto under the conditions shown in Table 5 in the same manner as in the Example 1 to provide laminated articles.

Example 12

There was prepared an aqueous photocurable adhesive which was the same as in the Example 11 except that it contained no photopolymerization initiator.

Laminated articles were produced in the same manner as in the Example 11 using electron ray as a radiant ray under the conditions shown in Table 5 in place of ultraviolet ray.

Appearance and Properties of Laminated Articles

Immediately after the lamination, the appearance of the resultant laminated articles was observed. Further, the laminated articles were subjected to measurement of 180° separation adhesive strength (temperature: 23°C, relative humidity: 50 %, peeling speed: 300 mm/min.), resistance to heat creep, resistance to scoring, resistance to pulse, T-type separation adhesive strength (temperature: 23°C , relative humidity: 50 %, peeling speed: 300 mm/min.), heat seal strength, and heat seal strength after boiling. The results are shown in Tables 1 to 5.

TABLE 1

| | Examples | | | | |
|---|---|---|---|---|---|
| | 1 | | | 2 | |
| | (1) | (2) | (3) | (1) | (2) |
| Production of Laminated Film | | | | | |
| Construction of laminated Film[1)] | | | | | |
| First substrate | OPP | Paper* | Nylon | OPP | Nylon |
| Second substrate | Paper | PVC | PET | Paper | PE |
| Adhesive coated surface | OPP | Paper* | Nylon | OPP | Nylon |
| Amount of adhesive coated (solid, $g/m^2$) | 5 | 8 | 3 | 5 | 3 |
| Line speed (m/min.) | 25 | 25 | 30 | 25 | 40 |
| Radiant ray[2)] | UV | UV | UV | E | E |
| Irradiated surface | OPP | PVC | PET | OPP | NYLON |
| UV Irradiation (W/cm) | 120 | 120 | 160 | — | — |
| Electron ray irradiation (Mrad) | — | — | — | 3 | 3 |

TABLE 1 (Continued)

| | Examples | | | | |
|---|---|---|---|---|---|
| | 1 | | | 2 | |
| | (1) | (2) | (3) | (1) | (2) |
| Properties of Laminated Film | | | | | |
| Appearance | Good | Good | Good | Good | Good |
| 180° Separation Adhesive strength (g/15 mm breadth) | 200 | 600 | — | 200 | — |
| Resistance to heat creap (mm/hr)[3] | 0 | 0 | — | 0 | — |
| Creasability[4] | Good | Good | — | Good | — |
| Resistance to kerosine[5] | Good | Good | — | Good | — |
| T-type Separation adhesive strength (g/15 mm breadth) | — | — | 550 | — | 550 |
| Heat seal strength[6] (Kg/15 mm breadth) | — | — | 4.3 | — | 4.1 |
| Heat seal strength after boiling[7] (Kg/15 mm breadth) | — | — | 4.0 | — | 3.8 |

TABLE 2

| | Examples | | | | | |
|---|---|---|---|---|---|---|
| | 3 | | 4 | | 5 | |
| | (1) | (2) | (1) | (2) | (1) | (2) |
| Production of Laminated Film | | | | | | |
| Construction of laminated Film1) | | | | | | |
| First substrate | OPP | Nylon | OPP | Nylon | PVC | PET |
| Second substrate | Paper | PE | Paper | PE | Paper | PE |
| Adhesive coated surface | OPP | Nylon | OPP | Nylon | PVC | PET |
| Amount of adhesive coated (solid, $g/m^2$) | 5 | 3 | 5 | 3 | 7 | 3 |
| Line speed (m/min.) | 25 | 30 | 25 | 40 | 25 | 30 |
| Radiant ray2) | UV | UV | E | E | UV | UV |
| Irradiated surface | OPP | PE | OPP | Nylon | PVC | PE |
| UV Irradiation (W/cm) | 120 | 160 | — | — | 120 | 160 |
| Electron ray irradiation (Mrad) | — | — | 3 | 3 | — | — |

TABLE 2 (Continued)

| | Examples | | | | | |
|---|---|---|---|---|---|---|
| | 3 | | 4 | | 5 | |
| | (1) | (2) | (1) | (2) | (1) | (2) |
| Properties of Laminated Film | | | | | | |
| Appearance | Good | Good | Good | Good | Good | Good |
| 180° Separation Adhesive strength (g/15 mm breadth) | 200 | — | 210 | — | 230 | — |
| Resistance to heat creap (mm/hr)[3] | 0 | — | 0 | — | 0 | — |
| Creasability[4] | Good | — | Good | — | Good | — |
| Resistance to kerosine[5] | Good | — | Good | — | Good | — |
| T-type Separation adhesive strength (g/15 mm breadth) | — | 540 | — | 530 | — | 350 |
| Heat seal strength[6] (Kg/15 mm breadth) | — | 4.2 | — | 4.2 | — | 4.3 |
| Heat seal strength after boiling[7] (Kg/15 mm breadth) | — | 4.0 | — | 3.9 | — | 3.7 |

TABLE 3

| | Examples | | | | | |
|---|---|---|---|---|---|---|
| | 6 | | 7 | | 8 | |
| | (1) | (2) | (1) | (2) | (1) | (2) |
| Production of Laminated Film | | | | | | |
| Construction of laminated Film[1)] | | | | | | |
| First substrate | Paper* | PET | OPP | Nylon | OPP | Nylon |
| Second substrate | OPP | PE | Paper | PE | Paper | PE |
| Adhesive coated surface | Paper* | PET | OPP | Nylon | OPP | Nylon |
| Amount of adhesive coated (solid, $g/m^2$) | 7 | 3 | 5 | 3 | 5 | 3 |
| Line speed (m/min.) | 25 | 40 | 25 | 30 | 25 | 40 |
| Radiant ray[2)] | E | E | UV | UV | E | E |
| Irradiated surface | OPP | PET | OPP | PE | OPP | Nylon |
| UV Irradiation (W/cm) | — | — | 120 | 160 | — | — |
| Electron ray irradiation (Mrad) | 3 | 3 | — | — | 3 | 3 |

TABLE 3 (Continued)

| | Examples | | | | | |
|---|---|---|---|---|---|---|
| | 6 | | 7 | | 8 | |
| | (1) | (2) | (1) | (2) | (1) | (2) |
| Properties of Laminated Film | | | | | | |
| Appearance | Good | Good | Good | Good | Good | Good |
| 180° Separation Adhesive strength (g/15 mm breadth) | 310 | — | 200 | — | 210 | — |
| Resistance to heat creap (mm/hr)[3)] | 0 | — | 0 | — | 0 | — |
| Creasability[4)] | Good | — | Good | — | Good | — |
| Resistance to kerosine[5)] | Good | — | Good | — | Good | — |
| T-type Separation adhesive strength (g/15 mm breadth) | — | 310 | — | 520 | — | 530 |
| Heat seal strength[6)] (Kg/15 mm breadth) | — | 3.3 | — | 4.1 | — | 4.3 |
| Heat seal strength after boiling[7)] (Kg/15 mm breadth) | — | 3.1 | — | 3.9 | — | 4.0 |

TABLE 4

| | Examples 9 (1) | Examples 9 (2) | Examples 10 (1) | Examples 10 (2) |
|---|---|---|---|---|
| Production of Laminated Film | | | | |
| Construction of laminated Film[1)] | | | | |
| First substrate | OPP | Nylon | Paper* | PET |
| Second substrate | Paper | PE | OPP | PE |
| Adhesive coated surface | OPP | Nylon | Paper* | PET |
| Amount of adhesive coated (solid, $g/m^2$) | 4 | 3 | 7 | 3 |
| Line speed (m/min.) | 30 | 40 | 25 | 40 |
| Radiant ray[2)] | UV | UV | E | E |
| Irradiated surface | OPP | PE | OPP | PET |
| UV Irradiation (W/cm) | 120 | 160 | — | — |
| Electron ray irradiation (Mrad) | — | — | 3 | 3 |

TABLE 4 (Continued)

| | Examples | | | |
|---|---|---|---|---|
| | 9 | | 10 | |
| | (1) | (2) | (1) | (2) |
| Properties of Laminated Film | | | | |
| Appearance | Good | Good | Good | Good |
| 180° Separation Adhesive strength (g/15 mm breadth) | 210 | — | 320 | — |
| Resistance to heat creap (mm/hr)[3] | 0 | — | 0 | — |
| Creasability[4] | Good | — | Good | — |
| Resistance to kerosine[5] | Good | — | Good | — |
| T-type Separation adhesive strength (g/15 mm breadth) | — | 540 | — | 320 |
| Heat seal strength[6] (Kg/15 mm breadth) | — | 4.3 | — | 3.4 |
| Heat seal strength after boiling[7] (Kg/15 mm breadth) | — | 3.9 | — | 3.2 |

TABLE 5

| | Examples | | | | |
|---|---|---|---|---|---|
| | 11 | | | 12 | |
| | (1) | (2) | (3) | (1) | (2) |
| Production of Laminated Film | | | | | |
| Construction of laminated Film[1)] | | | | | |
| First substrate | OPP | Paper* | Nylon | OPP | Nylon |
| Second substrate | Paper | PVC | PE | Paper | PE |
| Adhesive coated surface | OPP | Paper* | Nylon | OPP | Nylon |
| Amount of adhesive coated (solid, $g/m^2$) | 4 | 8 | 3 | 5 | 3 |
| Line speed (m/min.) | 30 | 25 | 35 | 25 | 40 |
| Radiant ray[2)] | UV | UV | UV | E | E |
| Irradiated surface | OPP | PVC | PE | OPP | NYLON |
| UV Irradiation (W/cm) | 120 | 120 | 160 | — | — |
| Electron ray irradiation (Mrad) | — | — | — | 3 | 3 |

TABLE 5 (Continued)

| Properties of Laminated Film | Examples | | | | |
|---|---|---|---|---|---|
| | 11 | | | 12 | |
| | (1) | (2) | (3) | (1) | (2) |
| Appearance | Good | Good | Good | Good | Good |
| 180° Separation Adhesive strength (g/15 mm breadth) | 230 | 580 | — | 210 | — |
| Resistance to heat creap (mm/hr)[3] | 0 | 0 | — | 0 | — |
| Creasability[4] | Good | Good | — | Good | — |
| Resistance to kerosine[5] | Good | Good | — | Good | — |
| T-type Separation adhesive strength (g/15 mm breadth) | — | — | 550 | — | 540 |
| Heat seal strength[6] (Kg/15 mm breadth) | — | — | 4.4 | — | 4.4 |
| Heat seal strength after boiling[7] (Kg/15 mm breadth) | — | — | 3.8 | — | 4.1 |

Notes of Tables 1 to 5

1) The abbreviations of the aubstrates stand for the followings.

Nonasterisked paper: Printed art coat paper.

Asterisked paper: Printed paper having a thickness of 0.5 mm and a window.

OPP: Corona-treated, transparent, biaxially stretched polypropylene film of 15 μ m.
PVC: Transparent polyvinyl chloride resin film of 20 μ m thick.
ON: Polyamide film having a thickness of 15 μ m and a colored printing thereon.
LLDPE: Transparent low density polyethylene film of 40 μ m thick.
OPS: Transparent, biaxially stretched polystyrene film of 25 μ m thick.
PET: Polyethylene terephthalate film of having a thickness of 12 μ m and a colored printing thereon.

2) UV: Ultraviolet ray
E: Electron ray

3) The substrates of a sample of laminated film of 25 mm in breadth were partly separated from each other and one of the substrates was turned inside out. The laminated film was heated at 50 ° C for 60 minutes under a load of 50 g and then the length of the substrate separated from the other substrate was measured.

4) A sample of a laminated film was left standing at 50 ° C for one hour after ceasing, and then there was observed whether separation of the substrates took place. "Good" means that no separation took place.

5) A sample of a laminated film was scored, immersed in kerosine for five seconds and air-dried. After 24 hours, there was observed whether separation of the substrates took place. "Good" means that no separation took place.

6) A couple of laminated films were pressed at 160 ° C under a pressure of 2 $Kg/cm^2$ for one second with the polyethylene films inside, and then T-type separation adhesive strength was measured.

7) A pouch of inside dimensions of 100 mm x 150 mm was prepared, 200 ml of water was placed therein, and the pouch was sealed. The pouch was heated at 90 ° C for 30 minutes in hot water, and thereafter T-type separation adhesive strength was measured.

## Claims

1. A water soluble photocurable polyurethene poly(meth)acrylate which contains in the molecule (meth)-acryloyl groups and water soluble groups composed of carboxyls of a salt structure with ammoniums or amino nitrogens.

2. The polyurethane poly(meth)crylate as claimed in claim 1 wherein the water soluble groups are in the form of a quaternary ammonium salt.

3. The polyurethane poly(meth)crylate as claimed in claim 1 which is produced by reacting a diisocyanate compound with a compound having active hydrogens in the molecule and a compound having two or more hydroxyls and one or more carboxyls in the molecule to prepare a polyurethane which has carboxyl groups in the molecule, reacting the polyurethane with a vinyl monomer which has both hydroxyls and (meth)acryloyl groups in the molecule to prepare a polyurethane poly(meth)acrylate having carboxyl groups in the molecule, and then reacting the polyurethane poly (meth) acrylate with ammonia or organic amine compounds to convert the carboxyl groups to a salt structure with the ammonia or amines.

4. The polyurethane poly(meth)crylate as claimed in claim 1 wherein the organic amine compound is a tertiary amine compound.

5. The polyurethane poly(meth)crylate as claimed in claim 4 wherein the tertiary amine compound is a reialkanolamine.

6. The polyurethane poly(meth)crylate as claimed in claim 3 wherein the compound having two or more hydroxyls and one or more carboxyls In the molecule is represented by the formula

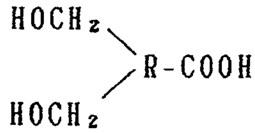

wherein R represents an alkylene group having carbons of 2-10.

7. The polyurethane poly(meth)crylate as claimed in claim 3 wherein the salt structure is a quaternary ammonium salt structure.

8. The polyurethane poly(meth)crylate as claimed in claim 3 wherein the compound having active hydrogens in the molecule is a mixture composed of a first compound having an OH equivalent of 30-200 and a second compound having an OH equivalent of 350-4000 wherein the mixture has an average OH equivalent In the range of 70-2000.

9. The polyurethane poly(meth)crylate as claimed in claim 1 which is produced by reacting a diisocyanate compound with a compound having active hydrogens in the molecule to provide a polyurethane, reacting the polyurethane with a compound which has one or more hydroxyls and one or more amino groups in the molecule and a vinyl monomer which has both hydroxyls and (meth)acryloyl groups in the molecule to prepare a polyurethane poly(meth)acrylate which has amino groups in the molecule, and then reacting the polyurethane poly(meth)acrylate with an organic carboxylic acid to form a salt structure of the amino groups.

10. The polyurethane poly(meth)crylate as claimed in claim 9 wherein the compound which has one or more hydroxyls and one or more amino groups In the molecule is an N,N-dialkylalkanolamine or an N-alkyldialkanolamine.

11. The polyurethane poly(meth)crylate as claimed in claim 8 wherein the salt structure is a quaternary ammonium salt structure.

12. The polyurethane poly(meth)crylate as claimed in claim 8 wherein the compound having active hydrogens in the molecule is a mixture composed of a first compound having an OH equivalent of 30-200 and a second compound having an OH equivalent of 350-4000 wherein the mixture has an average OH equivalent in the range of 70-2000.

13. The polyurethane poly(meth)crylate as claimed in claim 1 which is produced by reacting a diisocyanate compound with a compound having active hydrogens in the molecule and a compound having two or more hydroxyls and one or more amino groups to provide a polyurethane poly(meth)acrylate having amino groups in the molecule, and then reacting the polyuerethane poly(meth)acrylate with an organic carboxylic acid to form a salt structure of the amino groups.

14. The polyurethane poly(meth)crylate as claimed in claim 13 wherein the compound having two or more hydroxyls and one or more amino groups is an N-alkyldialkanolamine.

15. The polyurethane poly(meth)crylate as claimed in claim 13 wherein the salt structure is a quaternary ammonium salt structure.

16. The polyurethane poly(meth)crylate as claimed in claim 10 wherein the compound having active hydrogens in the molecule is a mixture composed of a first compound having an OH equivalent of 30-200 and a second compound having an OH equivalent of 350-4000 wherein the mixture has an average OH equivalent in the range of 70-2000.

17. An aqueous photocurable adhesive which comprises a water soluble photocurable polyurethene poly-(meth)acrylate containing In the molecule (meth)acryloyl groups and water soluble groups composed of carboxyls of a salt structure with ammoniums or amino nitrogens.

18. The adhesive as claimed in claim 17 wherein the carboxyl groups are in the form of a quaternary ammonium salt.

19. The adhesive as claimed in claim 17 which further comprises an adhesive coupling agent in an amount of 0.05-10 parts by weight in relation to 100 parts by weight of the polyurethane poly(meth)crylate and water in such an amount as make the mixture be a solution.

20. The photocurable adhesive as claimed in claim 19 wherein the coupling agent is a silane coupling agent.

**21.** The photocurable adhesive as claimed in claim 19 wherein the coupling agent is a titanate coupling agent.

**22.** The photocurable adhesive as claimed in claim 19 wherein the coupling agent is an aluminum coupling agent.

**23.** The photocurable adhesive as claimed in claim 19 wherein the adhesive further contains a second photopolymerizable compound other than the water soluble polyurethane poly(meth)acrylate.

**24.** The photocurable adhesive as claimed in claim 19 wherein the adhesive further contains a photosensitizer in an amount of 0.01-20 parts by weight in relation to 100 parts by weigt of the polyurethane poly(meth)acrylate.

**25.** The photocurable adhesive as claimed in claim 19 wherein the polyurethane poly(meth)crylate is produced by reacting a diisocyanate compound with a compound having active hydrogens in the molecule and a compound having two or more hydroxyls and one or more carboxyls in the molecule to prepare a polyurethane which has carboxyl groups in the molecule, reacting the polyurethane with a vinyl monomer which has both hydroxyls and (meth)acryloyl groups in the molecule to prepare a polyurethane poly(meth)acrylate having carboxyl groups in the molecule, and then reacting the polyurethane poly(meth)acrylate with ammonia or organic amine compounds to convert the carboxyl groups to a quaternary ammonium salt structure with the ammonia or amines, wherein the compound having active hydrogens in the molecule is a mixture composed of a first compound having an OH equivalent of 30-200 and a second compound having an OH equivalent of 350-4000 wherein the mixture has an average OH equivalent in the range of 70-2000.

**26.** The photocurable adhesive as claimed in claim 19 wherein the polyurethane poly(meth)crylate is produced by reacting a diisocyanate compound with a compound having active hydrogens in the molecule to provide a polyurethane, reacting the polyurethane with a compound which has one or more hydroxyls and one or more amino groups in the molecule and a vinyl monomer which has both hydroxyls and (meth)acryloyl groups in the molecule to prepare a polyurethane poly(meth)acrylate which has amino groups in the molecule, and then reacting the polyurethane poly(meth)acrylate with an organic carboxylic acid to form a quaternary ammonium salt structure of the amino groups, wherein the compound having active hydrogens in the molecule is a mixture composed of a first compound having an OH equivalent of 30-200 and a second compound having an OH equivalent of 350-4000 wherein the mixture has an average OH equivalent in the range of 70-2000.

**27.** The photocurable adhesive as claimed in claim 19 wherein the polyurethane poly(meth)crylate is produced by reacting a diisocyanate compound with a compound having active hydrogens in the molecule and a compound having two or more hydroxyls and one or more amino groups to provide a polyurethane poly(meth)acrylate having amino groups in the molecule, and then reacting the polyuerethane poly(meth)acrylate with an organic carboxylic acid to form a quaternary ammonium salt structure of the amino groups, wherein the compound having active hydrogens in the molecule is a mixture composed of a first compound having an OH equivalent of 30-200 and a second compound having an OH equivalent of 350-4000 wherein the mixture has an average OH equivalent in the range of 70-2000.

**28.** A process of producing laminated articles, which comprises:

coating a photocurable adhesive on a first substrate, the photocurable adhesive comprising:

(a) a water soluble photocurable polyurethene poly(meth)acrylate which contains in the molecule (meth)acryloyl groups and water soluble groups composed of carboxyls of a quaternary salt structure with ammoniums or amino nitrogens;

(b) an adhesive coupling agent in an amount of 0.05-10 parts by weight in relation to 100 parts by weight of the polyurethene poly(meth)acrylate; and

(c) water as a solvent;

laminating the first substrate to a second substrate; and

applying ultraviolet ray or radiant ray to the resultant laminated film.

**29.** The process as claimed in claim 28 wherein the polyurethane poly(meth)crylate is produced by

reacting a diisocyanate compound with a compound having active hydrogens in the molecule and a compound having two or more hydroxyls and one or more carboxyls in the molecule to prepare a polyurethane which has carboxyl groups in the molecule, reacting the polyurethane with a vinyl monomer which has both hydroxyls and (meth)acryloyl groups in the molecule to prepare a polyurethane poly(meth)acrylate having carboxyl groups in the molecule, and then reacting the polyurethane poly(meth)acrylate with ammonia or organic amine compounds to convert the carboxyl groups to a quaternary ammonium salt structure with the ammonia or amines, where in the compound having active hydrogens in the molecule is a mixture composed of a first compound having an OH equivalent of 30-200 and a second compound having an OH equivalent of 350-4000 wherein the mixture has an average OH equivalent in the range of 70-2000.

**30.** The process as claimed in claim 28 wherein the polyurethane poly(meth)crylate is produced by reacting a diisocyanate compound with a compound having active hydrogens in the molecule to provide a polyurethane, reacting the polyurethane with a compound which has one or more hydroxyls and one or more amino groups in the molecule and a vinyl monomer which has both hydroxyls and (meth)acryloyl groups in the molecule to prepare a polyurethane poly(meth)acrylate which has amino groups in the molecule, and then reacting the polyurethane poly(meth)acrylate with an organic carboxylic acid to form a quaternary ammonium salt structure of the amino groups, wherein the compound having active hydrogens in the molecule is a mixture composed of a first compound having an OH equivalent of 30-200 and a second compound having an OH equivalent of 350-4000 wherein the mixture has an average OH equivalent in the range of 70-2000.

**31.** The process as claimed in claim 28 wherein the polyurethane poly(meth)crylate is produced by reacting a diisocyanate compound with a compound having active hydrogens in the molecule and a compound having two or more hydroxyls and one or more amino groups to provide a polyurethane poly(meth)acrylate having amino groups in the molecule, and then reacting the polyuerethane poly(meth)acrylate with an organic carboxylic acid to form a quaternary ammonium salt structure of the amino groups, wherein the compound having active hydrogens in the molecule is a mixture composed of a first compound having an OH equivalent of 30-200 and a second compound having an OH equivalent of 350-4000 wherein the mixture has an average OH equivalent in the range of 70-2000.